# EUROPÄISCHE PATENTSCHRIFT

(11) **EP 0 890 035 B1**
(45) Veröffentlichungstag und Bekanntmachung des Hinweises auf die Patenterteilung: **19.12.2001**
(21) Anmeldenummer: 97949892.0
(22) Anmeldetag: 08.11.1997
(51) Int. Cl.: F16D 27/00, H02K 7/06

(54) **ELEKTROMECHANISCHE STELLVORRICHTUNG FÜR KRAFTFAHRZEUGKUPPLUNG**
ELECTROMECHANICAL ACTUATING DEVICE FOR A VEHICLE CLUTCH
DISPOSITIF D'ACTIONNEMENT ELECTROMECANIQUE POUR EMBRAYAGE AUTOMOBILE

(30) Priorität: 20.01.1997 DE 19701739
(43) Veröffentlichungstag der Anmeldung: 13.01.1999
(73) Patentinhaber: ROBERT BOSCH GMBH, 70442 Stuttgart (DE)
(72) Erfinder: LOTT, Thomas, D-77815 Bühl (DE); BECKER, Rainer, F-67930 Beinheim (FR); BAUER, Peter-Josef, D-77815 Bühl (DE)
(86) Internationale Anmeldenummer: DE9702612
(87) Internationale Veröffentlichungsnummer: WO9831948

(56) Entgegenhaltungen:
- DE-A- 3 706 849
- DE-A- 4 238 368
- GB-A- 2 099 235
- GB-A- 2 279 124

## Beschreibung

### Stand der Technik

Die Erfindung betrifft eine Stellvorrichtung für ein Stellglied, insbesondere einen Kupplungssteller zum Ein- und Ausrücken einer Fahrzeugkupplung, der im Oberbegriff des Anspruchs 1 definierten Gattung.

Bei einer bekannten Stelleinrichtung für eine Kraftfahrzeug-Reibungskupplung der eingangs genannten Art (DE 37 06 849 A1) nimmt das Stellergehäuse das als Schneckenradgetriebe ausgebildete Kurbelgetriebe auf, und der von einem eigenständigen Gehäusemantel umschlossene Elektromotor sowie das als hydraulischer Geberzylinder mit Verschiebekolben ausgebildete Stellglied sind an das Gehäuse angeflanscht. Die Abtriebswelle des Elektromotors ragt in das Stellergehäuse hinein und trägt endseitig das Schneckenrad. Der mit dem Kurbelgetriebe verbundene Stößel ragt in den Geberzylinder hinein und ist dort mit dem Verschiebekolben verbunden. Der Wegsensor ist als Drehpotentiometer ausgebildet, das die Winkelposition des Schneckenrads sensiert, wozu der Schleifbahnträger des Drehpotentiometers am Gehäuse und der Schleifer auf einem Ende der Schneckenradwelle befestigt ist.

### Vorteile der Erfindung

Die erfindungsgemäße Stellvorrichtung mit den kennzeichnenden Merkmalen des Anspruchs 1 hat durch die geringe Anzahl mechanischer Bauteile und deren Anordnung im Gehäuse sowie durch die Integration der Steuerelektronik ins Gehäuse den Vorteil eines einfachen und kostengünstigen Aufbaus bei extrem kleinem Bauvolumen. Zudem zeichnet sich die Stellvorrichtung wegen der mit der Integration der Steuerelektronik in das Gehäuse einhergehenden sehr kurzen EMV-Strecke durch eine sehr viel größere Störfestigkeit aus.

Durch die in den weiteren Ansprüchen aufgeführten Maßnahmen sind vorteilhafte Weiterbildungen und Verbesserungen der im Anspruch 1 angegebenen Stellvorrichtung möglich.

Gemäß einer bevorzugten Ausführungsform der Erfindung ist das Gehäuseunterteil des zweiteiligen Stellergehäuses aus Kunststoff und das Gehäuseoberteil aus Aluminium hergestellt, wobei die Steuerelektronik an dem Gehäuseoberteil, bevorzugt über Kühlbügel, befestigt ist. Durch die Ausbildung des Gehäuseoberteils aus gut wärmeleitendem Material wird die Wärmeabfuhr von der Steuerelektronik nach außen beschleunigt, so daß mit der Kompaktheit der Konstruktion keine Funktionsverschlechterung durch Wärmestau in Kauf genommen werden muß.

Gemäß einer vorteilhaften Ausführungsform der Erfindung weist der Wegsensor einen parallel zum Stößel ausgerichteten, am Gehäuseunterteil befestigten, linearen Weggeber und einen am Kurbelgetriebe oder am Stößel befestigten Zapfen auf, der mit einem vom Weggeber abstehenden Mitnehmer zusammenwirkt, wobei Zapfen und Mitnehmer mittels Federkraft in Verschieberichtung des Mitnehmers an einander gespannt sind. Damit ist der integrierte Wegsensor direkt mit der Verstellmechanik gekoppelt, und durch die Federbelastung tritt nur eine vernachlässigbar kleine Hysterese auf.

### Zeichnung

Die Erfindung ist anhand eines in der Zeichnung dargestellten Ausführungsbeispiels in der nachfolgenden Beschreibung näher erläutert. Es zeigen:
- Fig. 1: eine Draufsicht eines Kupplungsstellers für ein Kraftfahrzeug bei entferntem Gehäuseoberteil,
- Fig. 2: eine Unteransicht des Kupplungsstellers in Fig. 1 bei entferntem Gehäuseunterteil.

### Beschreibung des Ausführungsbeispiels

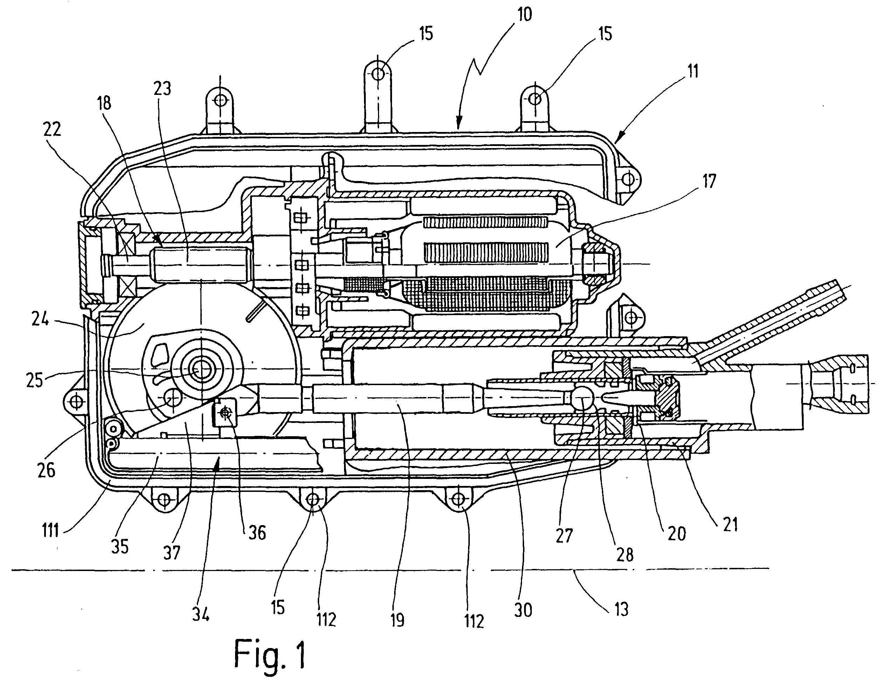

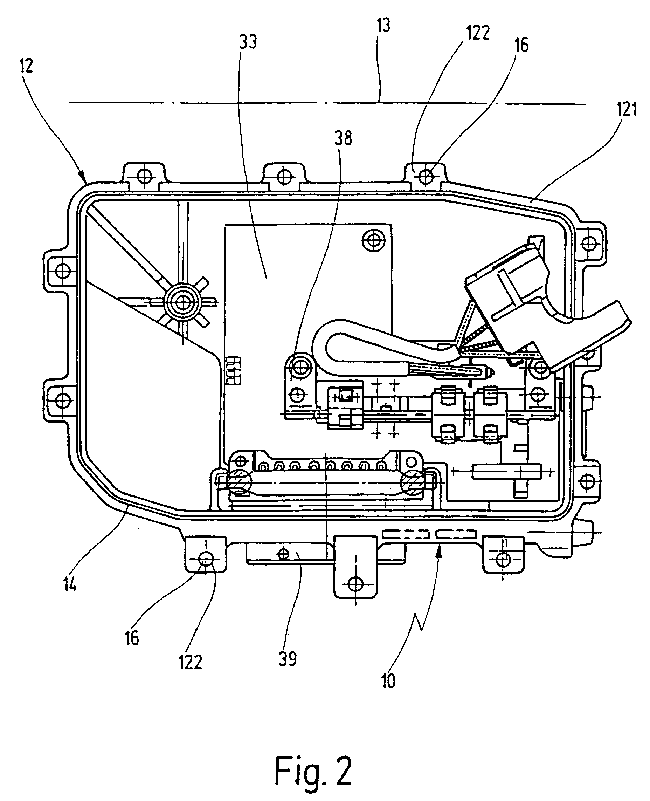

Der in Fig. 1 und 2 dargestellte Kupplungssteller zum Ein- und Ausrücken einer Fahrzeugkupplung, als Ausführungsbeispiel für eine allgemeine Stellvorrichtung für ein Stellglied, ist komplett in einem zweischaligen Stellergehäuse 10 integriert, das aus einem aus Kunststoff hergestellten Gehäuseunterteil 11 (Fig. 1) und einem aus Aluminium hergestellten Gehäuseoberteil 12 (Fig. 2) besteht. Gehäuseoberteil 12 und Gehäuseunterteil 11 werden um die in Fig. 1 und 2 strichpunktiert dargestellte Schwenkachse 13 geklappt, so daß die beiden an jedem Teil 11 bzw. 12 angeformten Flansche 111 und 121 unter Zwischenlage einer Dichtung 14 aufeinanderliegen. An den Flanschen 111 und 121 sind Augen 112 bzw. 122 ausgebildet, die einerseits Durchgangsbohrungen 16 und andererseits Bohrungen 15 zum Einschrauben von durch die Durchgangsbohrungen 16 hindurchgesteckten, hier nicht dargestellten Schrauben, vorzugsweise Gewindefurchschrauben, enthalten.

Im Gehäuseunterteil 11 ist ein Elektromotor 17 mit Kurbelgetriebe 18 sowie ein Stößel 19 aufgenommen, der mit einem Kolben 20 eines hydraulischen Geberzylinders 21 verbunden ist. Die Achse des Stößels 19 verläuft dabei beispielsweise annähernd parallel zur Achse des Elektromotors 17. Das Kurbelgetriebe 18 setzt in bekannter Weise die rotatorische Bewegung der Abtriebswelle 22 des Elektromotors 17 in eine translatorische Bewegung des Stößels 19 und damit in eine Verschiebebewegung des Kolbens 20 um. Das Kurbelgetriebe 18 ist hier als ein aus Schnecke 23 und Schneckenrad 24 bestehendes Schneckengetriebe ausgeführt, wobei die Schnecke 23 drehfest auf der Abtriebswelle 22 des Elektromotors 17 sitzt und das Schneckenrad 24 quer dazu im Gehäuseunterteil 11 gelagert ist. Der Stößel 19 ist mit seinem kolbenfernen Ende 20 am Schneckenrad 24 angelenkt, und zwar im Radialabstand von der Schneckenradachse 25. Die Anlenkung ist über einen Zapfen 26, eingepreßt in das Schneckenrad 24, verwirklicht.

Zum Ein- und Ausrücken der Kupplung dreht das Schneckenrad 24 nur über einen Drehwinkel von ca.120°. Dadurch führt der Stößel 19 nicht eine exakt geradlinige Axialbewegung aus, sondern seiner translatorischen Bewegung ist eine geringe Schwenkbewegung überlagert. Um ein einwandfreies Gleiten des Kolbens 20 im Geberzylinder 21 sicherzustellen, greift daher der Stößel 19 mit einem Kugelkopf 27 in eine entsprechend ausgeformte Kugelpfanne 28 in der Stirnseite des Kolbens 20 ein. Der Geberzylinder 21 ist in einer Aufnahmehülse 30 untergebracht, die Bestandteil des aus Kunststoff bestehenden Gehäuseunterteils 11 ist. Zum Ausrücken der Kupplung treibt der Elektromotor 17 das Schneckenrad 24 in einem Drehsinn an, in welchem der Stößel 19 eine im wesentlichen translatorische Bewegung in Fig. 1 nach rechts ausführt und dadurch den Kolben 20 in Druckrichtung verstellt. Zum Einrücken der Kupplung treibt der Elektromotor 17 das Schneckenrad 24 in entgegengesetztem Drehsinn an, so daß der Stößel 19 mit dem Kolben 20 wieder zurückgezogen wird, in Fig. 1 nach links. Dieser Vorgang wird von dem auf den Kolben 20 wirkenden, zurückströmenden Hydraulikfluid sowie von der Einrückfeder der Kupplung unterstützt.

Die Stellbewegung des Stößels 19 wird durch eine Steuerelektronik 33 gesteuert und der Stellweg des Stößels 19, und damit der Stellweg des Kolbens 20, von einem Wegsensor 34 überwacht. Der Wegsensor 34 besteht aus einem linearen Weggeber 35, der parallel zum Stößel 19 ausgerichtet und am Gehäuseunterteil 11 befestigt ist, und aus einem am Stößel 19 befestigten Zapfen 36, der mit einem vom Weggeber 35 abstehenden Mitnehmer 37 zusammenwirkt. Alternativ kann der Zapfen 36 auch am Schneckenrad 24 angeordnet werden. Wie hier nicht weiter dargestellt ist, sind der Zapfen 36 und der Mitnehmer 37 in Verschieberichtung mittels einer Feder kraftschlüssig aneinander gedrückt, so daß der Wegsensor 34 nur eine vernachlässigbare kleine Hysterese aufweist. Der Wegsensor 34 ist elektrisch an die Steuerelektronik 33 angeschlossen und kann beispielsweise durch ein Schiebepotentiometer realisiert werden, dessen Widerstandsbahn den Weggeber 35 bildet und dessen auf der Widerstandsbahn aufliegender Schleifer an dem Mitnehmer 37 befestigt ist. Der Wegsensor 34 kann aber auch in Form einer Spule, insbesondere Tauchspule, ausgebildet sein. Die Steuerelektronik 33 ist in dem aus Gründen der Festigkeit und der guten Wärmeleitung aus Aluminium hergestellten Gehäuseoberteil 12 befestigt, wobei die Befestigung vorzugsweise über Kühlbügel 38 erfolgt, so daß der Wärmeabfluß von der Steuerelektronik 33 zum Gehäuseoberteil 12 und von dort an die Umgebung noch verbessert wird.

Die Erfindung ist nicht auf das beschriebene Ausführungsbeispiel beschränkt, so kann das Gehäuseoberteil 12 auch aus einem anderen wärmeleitenden Material als Aluminium hergestellt werden.

## Patentansprüche

1. Stellvorrichtung für ein Stellglied, insbesondere Kupplungssteller zum Ein- und Ausrücken einer Fahrzeugkupplung, mit einem Elektromotor (17), mit einem auf das Stellglied wirkenden, axial verschieblich geführten Stößel (19), mit einem die rotatorische Bewegung einer Abtriebswelle (22) des Elektromotors (17) in eine translatorische Bewegung des Stößels (19) umsetzenden Kurbelgetriebe (18), mit einem Wegsensor (34) zur Erfassung der Stellgliedposition und mit einem Stellergehäuse (10), **dadurch gekennzeichnet, daß** das Stellergehäuse (10) zweischalig ausgebildet und aus einem Unter- und Oberteil (11,12) zusammengesetzt ist, die unter Zwischenlage einer Dichtung (14) miteinander verspannt sind, daß im Gehäuseunterteil (11) der Elektromotor (17) mit Kurbelgetriebe (18) und der Stößel (19) mit Stellglied (20,21) angeordnet sind und daß im Gehäuseoberteil (12) eine Steuerelektronik (33) für Wegsensor (34) und Elektromotor (17) aufgenommen ist.

2. Stellvorrichtung nach Anspruch 1, **dadurch gekennzeichnet, daß** das Gehäuseunterteil (11) aus Kunststoff und das Gehäuseoberteil (12) aus einem gut wärmeleitenden Material, vorzugsweise Aluminium, hergestellt ist.

3. Stellvorrichtung nach Anspruch 2, **dadurch gekennzeichnet, daß** die Steuerelektronik (33) an dem Gehäuseoberteil (12) befestigt und elektrisch an einem am Gehäuseoberteil (12) festgelegten elektrischen Anschlußstecker (39) angeschlossen ist.

4. Stellvorrichtung nach Anspruch 3, **dadurch gekennzeichnet, daß** die Befestigung der Steuerelektronik (33) am Gehäuseoberteil (12) mittels Kühlbügel (38) erfolgt.

5. Stellvorrichtung nach einem der Ansprüche 1 - 4, **dadurch gekennzeichnet, daß** der Wegsensor (34) einen parallel zum Stößel (19) ausgerichteten, am Gehäuseunterteil (11) befestigten, linearen Weggeber (35) und einen am Kurbelgetriebe (18) oder am Stößel (19) befestigten Zapfen (36) aufweist, der mit einem vom Weggeber (35) abstehenden Mitnehmer (37) zusammenwirkt.

6. Stellvorrichtung nach Anspruch 5, **dadurch gekennzeichnet, daß** Zapfen (36) und Mitnehmer (37) mittels Federkraft in Verschieberichtung des Mitnehmers (37) aneinander gespannt sind.

7. Stellvorrichtung nach einem der Ansprüche 1 - 6, **dadurch gekennzeichnet, daß** das Kurbelgetriebe (18) von einem Schneckengetriebe mit Schnecke (23) und Schneckenrad (24) gebildet ist, dessen Schnecke (23) drehfest auf der Abtriebswelle (22) des Elektromotors (17) sitzt und an dessen Schneckenrad (24) der Stößel (19) im Radialabstand von der Schneckenradachse (25) angelenkt ist.

8. Stellvorrichtung nach einem der Ansprüche 1 - 7, **dadurch gekennzeichnet, daß** an Gehäuseober- und -unterteil (12,11) jeweils ein umlaufender Flansch (121,111) ausgebildet ist und daß die Flansche (121,111) mit ihren Flanschflächen aufeinanderliegen und die Dichtung (14) aufnehmen sowie Befestigungsaugen (122,112) zum Verspannen der beiden Gehäuseteile (12,11) aufweisen.

9. Stellvorrichtung nach Anspruch 1, **dadurch gekennzeichnet, daß** der Wegsensor (34) als Potentiometer oder als Spule, insbesondere Tauchspule, ausgebildet ist.

## Claims

1. Actuating device for an actuating member, in particular a clutch actuator for the engagement and disengagement of a vehicle clutch, with an electric motor (17), with an axially displaceably guided tappet (19) acting on the actuating member, crank mechanism (18) converting the rotational movement of an output shaft (22) of the electric motor (17) into a translational movement of the tappet (19), with a travel sensor (34) for detecting the position of the actuating member and with an actuator housing (10), **characterized in that** the actuator housing (10) is of double-shell design and is composed of a lower and an upper part (11, 12) which are braced relative to one another, with a gasket (14) being interposed, **in that** the electric motor (17) with crank mechanism (18) and the tappet (19) with actuating member (20, 21) are arranged in the housing lower part (11), and **in that** control electronics (33) for the travel sensor (34) and the electric motor (17) are received in the housing upper part (12).

2. Actuating device according to Claim 1, **characterized in that** the housing lower part (11) is produced from plastic and the housing upper part (12) from a material having good thermal conductivity, preferably aluminium.

3. Actuating device according to Claim 2, **characterized in that** the control electronics (33) are fastened to the housing upper part (12) and are connected electrically to an electric connecting plug (39) fixed to the housing upper part (12).

4. Actuating device according to Claim 3, **characterized in that** the control electronics (33) are fastened to the housing upper part (12) by means of cooling shackles (38).

5. Actuating device according to one of Claims 1 - 4, **characterized in that** the travel sensor (34) has a linear travel transducer (35), oriented parallel to the tappet (19) and fastened to the housing lower part (11), and a pin (36), which is fastened to the crank mechanism (18) or to the tappet (19) and which cooperates with a driver (37) projecting from the travel transducer (35).

6. Actuating device according to Claim 5, **characterized in that** the pin (36) and the driver (37) are tensioned one against the other in the direction of displacement of the driver (37) by means of spring force.

7. Actuating device according to one of Claims 1 - 6, **characterized in that** the crank mechanism (18) is formed by a worm gear with worm (23) and worm wheel (24), the worm (23) of which is seated fixedly in terms of rotation on the output shaft (22) of the electric motor (17) and on the worm wheel (24) of which the tappet (19) is articulated at a radial distance from the worm-wheel axis (25).

8. Actuating device according to one of Claims 1 - 7, **characterized in that** a peripheral flange (121, 111) is formed in each case on the housing upper and lower part (12, 11), and **in that** the flanges (121, 111) rest with their flange surfaces one on the other and receive the gasket (14) and also have fastening lugs (122, 112) for bracing the two housing parts (12, 11).

9. Actuating device according to Claim 1, **characterized in that** the travel sensor (34) is designed as a potentiometer or as a coil, in particular a moving coil.

## Revendications

1. Dispositif d'actionnement pour un actionneur, notamment un actionneur d'embrayage pour embrayer et débrayer un embrayage de véhicule automobile, comprenant un moteur électrique (17) avec un poussoir (19) guidé en coulissement axial pour agir sur l'organe d'actionnement, une transmission à manivelle (18) qui transforme le mouvement de rotation de l'arbre de sortie (22) du moteur électrique (17) en un mouvement de translation du poussoir (19), un capteur de course (34) pour déceler la position de l'organe d'actionnement, et un boîtier (10) pour l'actionneur,
**caractérisé en ce que**
le boîtier (10) de l'actionneur est réalisé par deux coquilles, à savoir une coquille inférieure et une coquille supérieure (11, 12) assemblées et serrées l'une contre l'autre avec interposition d'un joint (14),
la partie inférieure (11) du boîtier loge le moteur électrique (17) avec la transmission à manivelle (18) et le poussoir (19) avec son actionneur (20, 21), et
la partie supérieure (12) du boîtier loge une électronique de commande (33) pour le capteur de course (34) et le moteur électrique (17).

2. Dispositif d'actionnement selon la revendication 1,
**caractérisé en ce que**
la partie inférieure (11) du boîtier est en matière plastique et la partie supérieure (12) du boîtier est en une matière bonne conductrice de la chaleur, de préférence de l'aluminium.

3. Dispositif d'actionnement selon la revendication 2,
**caractérisé en ce que**
l'électronique de commande (33) est fixée à la partie supérieure (12) du boîtier et est raccordée électriquement à un connecteur électrique (39) fixé à la partie supérieure du boîtier (12).

4. Dispositif d'actionnement selon la revendication 3,
**caractérisé en ce que**
la fixation de l'électronique de commande (33) se fait sur la partie supérieure (12) du boîtier à l'aide d'étriers de refroidissement (38).

5. Dispositif d'actionnement selon l'une quelconque des revendications 1 à 4,
**caractérisé en ce que**
le capteur de course (34) comporte un capteur de course linéaire (35), aligné parallèlement sur le poussoir (19) et fixé à la partie inférieure (11) du boîtier, ainsi qu'un téton (36) fixé à la transmission à manivelle (18) ou au poussoir (19) et qui coopère avec un organe d'entraînement (37) en saillie sur le capteur de course (35).

6. Dispositif d'actionnement selon la revendication 5,
**caractérisé en ce que**
le téton (36) et l'organe d'entraînement (37) sont serrés l'un contre l'autre dans la direction de déplacement de l'organe d'entraînement (37), par la force d'un ressort.

7. Dispositif d'actionnement selon l'une quelconque des revendications 1 à 6,
**caractérisé en ce que**
la transmission à manivelle (18) est formée par une transmission à vis comprenant une vis (23) et une roue à vis (24), la vis (23) étant montée solidairement en rotation sur l'arbre de sortie (22) du moteur électrique (17), et le poussoir (19) est articulé sur la roue à vis (24) à la distance radiale de l'axe (25) de cette roue.

8. Dispositif d'actionnement selon l'une quelconque des revendications 1 à 7,
**caractérisé en ce que**
la partie supérieure et la partie inférieure (12, 11) du boîtier comportent chacune une bride périphérique (121, 111), ces brides s'appuient l'une sur l'autre en recevant un joint (14) et comportent des oeillets de fixation (122, 112) pour serrer les deux parties de boîtier (12, 11).

9. Dispositif d'actionnement selon la revendication 1,
**caractérisé en ce que**
le capteur de course (34) est un potentiomètre ou une bobine, notamment une bobine plongeuse.
